(19) **Europäisches Patentamt**

**European Patent Office**

**Office européen des brevets**

(11) **EP 1 655 884 A1**

(12) **EUROPEAN PATENT APPLICATION**

(43) Date of publication:
**10.05.2006 Bulletin 2006/19**

(51) Int Cl.:
***H04L 9/08*** (2006.01)

(21) Application number: **05292380.2**

(22) Date of filing: **09.11.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **09.11.2004 JP 2004324775**<br><br>(71) Applicant: **SONY CORPORATION**<br>**Tokyo (JP)** | (72) Inventor: **Asano, Tomoyuki,**<br>**c/o Sony Corporation**<br>**Tokyo (JP)**<br><br>(74) Representative: **Thévenet, Jean-Bruno et al**<br>**Cabinet Beau de Loménie**<br>**158, rue de l'Université**<br>**75340 Paris Cédex 07 (FR)** |

(54) **Method and system for shifting key agreement status, and information storage medium**

(57) A method for shifting a key agreement status in a public-key cryptographic protocol that allows key agreement between three devices includes the steps of, under condition that allow key agreement between three devices including a first device (A), a second device (B), and a dummy device, reaching key agreement between the first device (A) and the second device (B), and replacing the dummy device with a third device (C), thereby shifting from two-device key agreement to three-device key agreement.

FIG. 1

EP 1 655 884 A1

**Description**

BACKGROUND OF THE INVENTION

1. Field of the Invention

The present invention relates to key agreement techniques in communication networks. More specifically, the present invention relates to a method and system for shifting from two-device key agreement to three-device key agreement or from three-device key agreement to two-device key agreement, and to an information storage medium capable of loading a program for shifting from two-device key agreement to three-device key agreement or from three-device key agreement to two-device key agreement.

2. Description of the Related Art

Recently, encryption of communication has become widespread as a security enhancement in communication networks between users. Common-key cryptography and public-key cryptography are widely used as communication cryptographic techniques.
The common-key cryptography is a cryptographic algorithm for encryption and decryption using the same key, in which a ciphertext sender and receiver share the same key. The common-key cryptography has the advantages of highspeed encryption and decryption and light communication load, but has the drawback of the necessity of transmitting a common key to the other party in advance through a safe route to share the common key. Another drawback is that a thief of the common key is free to decode encrypted information.
The public-key cryptography is a cryptographic algorithm in which the sender uses a receiver's public key to encrypt transmission information and the receiver uses its own private key to decode the received encrypted information. The public-key cryptography has the drawbacks of low-speed encryption and decryption due to the difference between encryption and decryption keys and the possibility of third parties spoofing the sender because the use of the public key enables any one to encrypt information. In the public-key cryptography, a key used for encryption (or a public key) is published so as to be accessible to any one, and it is advantageous to share the cryptographic key without secretly transmitting the key (i.e., without the need to pass the key in advance through a safe route). Therefore, key management is simple, and is suitable for multi-user communication.
The Diffie-Hellman (DH) protocol and the JOUX protocol have been proposed as key agreement protocols using the public-key cryptography. The DH protocol is a two-device key agreement protocol (see Tatsuaki Okamoto and Hirosuke Yamamoto, "Gendai Angou (Modern Cryptography)", Sangyo Tosho, 1997). The JOUX protocol is a three-device key agreement protocol (see "A One Round Protocol for Tripartite Diffie-Hellman" (in Proceedings of The 4th Algorithmic Number Theory Symposium (ANTS4), Lecture Notes in Computer Science, Vol. 1838, Springer-Verlag)).
In the common-key cryptography, as noted above, the sender and the receiver share a common key, and it is necessary to transmit the common key to the other party in advance through a safe route to share the common key. On the other hand, the key agreement protocols using the public-key cryptography are advantageous in that a public key and a private key are used to share a key used for decryption without transmitting the key to the other party in advance.
Japanese Unexamined Patent Application Publications No. 4-347949, No. 2002-164877, No. 11-163850, and No. 5-122215 disclose systems relating to encryption of communication.

SUMMARY OF THE INVENTION

The DH protocol is a key agreement protocol using the public-key cryptography that allows two-device key agreement, but is difficult to directly use for three-device key agreement. The JOUX protocol is a key agreement protocol using the public-key cryptography that allows three-device key agreement, but is difficult to directly use for two-device key agreement.
In the case of shifting from two-device key agreement to three-device key agreement (e.g., in the case of reaching key agreement also with a third user) or in the case of shifting from three-device key agreement to two-device key agreement (e.g., in the case of canceling key agreement with one of the three devices), the currently used key agreement protocol itself is changed to reconfigure a key agreement system.
It is therefore desirable to provide a key agreement method for easily shifting from two-device key agreement to three-device key agreement or from three-device key agreement to two-device key agreement.
According to an embodiment of the present invention, a method for shifting a key agreement status in a public-key cryptographic protocol that allows key agreement between three devices includes the steps of, under conditions that allow key agreement between three devices including a first device, a second device, and a dummy device, reaching key agreement between the first device and the second device, and replacing the dummy device with a third device, thereby shifting from two-device key agreement to three-device key agreement.

According to another embodiment of the present invention, a method for shifting a key agreement status in a public-key cryptographic protocol that allows key agreement between three devices includes the steps of reaching key agreement between three devices in advance, and replacing one of the three devices with a dummy device, thereby shifting from three-device key agreement to two-device key agreement.

The term "dummy device" means a nonexistent device that is used, in a key agreement system based on a public-key cryptographic protocol that allows key agreement between three devices, instead of a third device in a case where first and second devices exist. If the third device does not exist, a public key (pseudo-public key) of the dummy device is used instead of a public key of the third device, thereby achieving two-device key agreement.

The pseudo-public key of the dummy device may be computed from a random value serving as an alternative private key and a parameter used to generate a public key from a private key.

Any public-key cryptographic protocol that allows key agreement between three devices may be used. For example, a key agreement protocol using a bilinear map may be used.

Therefore, it is easy to shift from two-device key agreement to three-device key agreement or from three-device key agreement to two-device key agreement without changing the system configuration or setting.

According to a further embodiment of the present invention, there is provided a system for shifting from two-device key agreement to three-device key agreement or from three-device key agreement to two-device key agreement using a public-key cryptographic protocol that allows key agreement between three devices. The system at least includes a main storage unit that stores a program for determining a common key from a combination of a private key of one of the three devices and public keys of the other two devices or a combination of a private key of one of the three devices, a public key of another device, and a pseudo-public key of a dummy device, a controller that interprets the program, an arithmetic unit that executes the program, a communication interface that communicates with another device, and a secure storage unit that stores the common key.

This system stores a program for determining a common key between devices from a public key of a third device or a pseudo-public key of a dummy device. Therefore, it is easy to shift from two-device key agreement to three-device key agreement or from three-device key agreement to two-device key agreement without changing the system configuration or setting.

According to a still further embodiment of the present invention, there is provided an information storage medium storing a program for shifting from key agreement between a first device and a second device to key agreement between the first device, the second device, and a third device. The program includes the steps of sending a public key of the first device to the second device in case of key agreement between the first device and the second device, receiving a public key of the second device, generating a common key from a private key of the first device, the public key of the second device, and a pseudo-public key of a dummy device, receiving a public key of the third device, sending the public key of the first device to the third device, and generating a common key between the first device, the second device, and the third device from the private key of the first device, the public key of the second device, and the public key of the third device.

According to a still further embodiment of the present invention, there is provided an information storage medium storing a program for shifting from key agreement between a first device, a second device, and a third device to key agreement between the first device and the second device. The program includes the steps of sending a public key of the first device to the second device and the third device, receiving a public key of the second device and a public key of the third device, generating a common key between the first device, the second device, and the third device from a private key of the first device, the public key of the second device, and the public key of the third device, and generating a common key between the first device and the second device based on the public key of the second device and the private key of the first device.

That is, a computation for shifting from two-device key agreement to three-device key agreement and from three-device key agreement to two-device key agreement can be automatically performed by a computer. Arbitrary devices may be set to the first, second, and third devices.

Therefore, it is easy to shift from two-device key agreement to three-device key agreement or from three-device key agreement to two-device key agreement. This is particularly useful in the field of communication networks using key cryptography.

BRIEF DESCRIPTION OF THE DRAWINGS

Fig. 1 is a block diagram showing an example configuration of a network for key-agreement according to an embodiment of the present invention;

Fig. 2 is a block diagram of a system according to an embodiment of the present invention;

Fig. 3 is a schematic flow diagram showing a method for shifting from two-device key agreement to three-device key agreement;

Fig. 4 is a flow diagram showing the operation of devices A and C in the method shown in Fig. 3;

Fig. 5 is a schematic flow diagram showing another method for shifting from two-device key agreement to three-device key agreement;

Fig. 6 is a flow diagram showing the operation of devices A and C in the method shown in Fig. 5;

Fig. 7 is a schematic flow diagram showing a method for shifting from three-device key agreement to two-device key agreement; and

Fig. 8 is a flow diagram showing the operation of devices A and C in the method shown in Fig. 7.

DESCRIPTION OF THE PREFERRED EMBODIMENTS

A preferred embodiment of the present invention will now be described below with reference to the drawings.

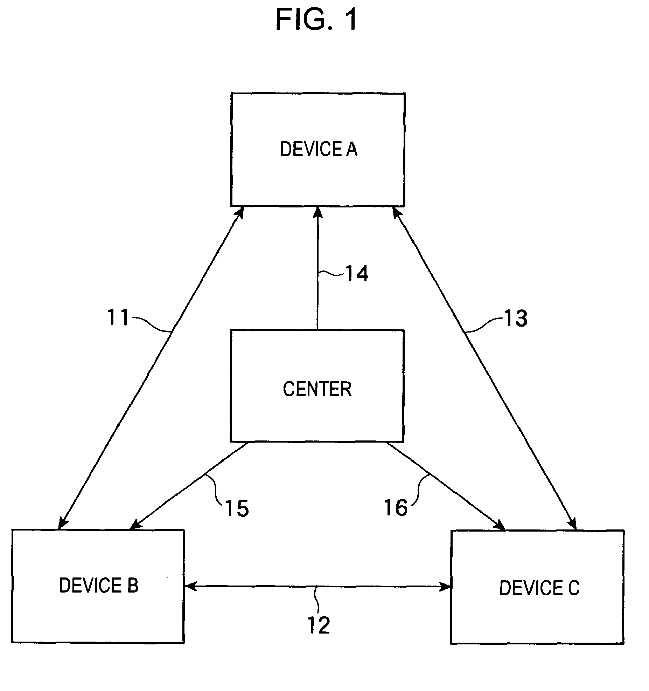

Fig. 1 is a diagram showing the configuration of a network for key-agreement according to an embodiment of the present invention. Referring to Fig. 1, the network for key-agreement includes devices A, B, and C that are to agree on a key, and a center connected to the devices A to C.

In the case of two-device key agreement, for example, the devices A and B agree on a key (11). In the case of three-device key agreement, for example, the devices A, B, and C agree on a key (11, 12, and 13). A method for shifting from two-device key agreement to three-device key agreement and a method for shifting from three-device key agreement to two-device key agreement are discussed below.

The center that is accessed by a plurality of devices (e.g., the devices A, B, and C) via communication interfaces (14, 15, and 16) functions to publish public information regarding a key agreement protocol using the public-key cryptography at the time of set-up processing discussed below. In view of security concerns, preferably, the center is guaranteed for reliability.

The center is necessary only for the set-up processing, and is no longer necessary after the set-up processing. One of the devices may function as the center. In Fig. 1, the center and the devices A to C are connected via the communication interfaces; however, they are not necessarily connected via communication interfaces. For example, the information sent from the center may be received by the devices A to C via storage media.

In order to set up the network for key-agreement according to the embodiment of present invention, the center performs set-up processing. The set-up processing will now be described in detail in the context of key cryptography using a bilinear map. The key agreement system according to the embodiment of the present invention may employ any key agreement protocol which allows three-device key agreement using the public-key cryptography, and is not limited to a bilinear-map-based key agreement system (the same applies the following description).

First, an additive group $G_1$ and a multiplicative group $G_2$ each having a prime order q are determined. The additive group $G_1$ is typically a subgroup of a group defined by points on an elliptic curve over a finite field.

Then, a bilinear map e is defined as follows:

$$e : G_1 \times G_1 \rightarrow G_2$$

... Eq. 1

The bilinear map e satisfies the following three requirements (for the details, see D. Boneh and M. Franklin, "Identity-Based Encryption from the Weil Pairing" (in Proceedings of Crypto '2001, Lecture Notes in Computer Science, Vol. 2139, Springer-Verlag, pp. 213 - 229, 2001)):

(1) Bilinear: arbitrary P, $Q \in G_1$ and arbitrary a, b $\in$ Z satisfy Eq. 2 below.
(2) Non-degenerate: if P generates $G_1$, then, e(P, P) generates $G_2$.
(3) Computable: there exists an efficient algorithm on arbitrary P, $Q \in G_1$ to compute e(P, Q).

$$e(aP, bQ) = e(P, Q)^{ab}$$

... Eq. 2

Then, an arbitrary parameter (generation source) P and a random value $s \in Z_q^*$ of the group $G_1$ are selected, and $P_{Pub} = sP$ is defined.

The parameter P is a parameter used to compute a public key from a private key. As described above, the value $P_{Pub}$ is derived from the random value s and the parameter P, and is analogous to a public key. In an embodiment of the present invention, the value $P_{Pub}$ is used as a pseudo-public key of a dummy device. The values q, $G_1$, $G_2$, e, P, and $P_{Pub}$ are published in the center as public information of the system. The term "publish" means to make the public information available to devices (e.g., in Fig. 1, the devices A, B, and C) in the key agreement system according to the embodiment of the present invention.

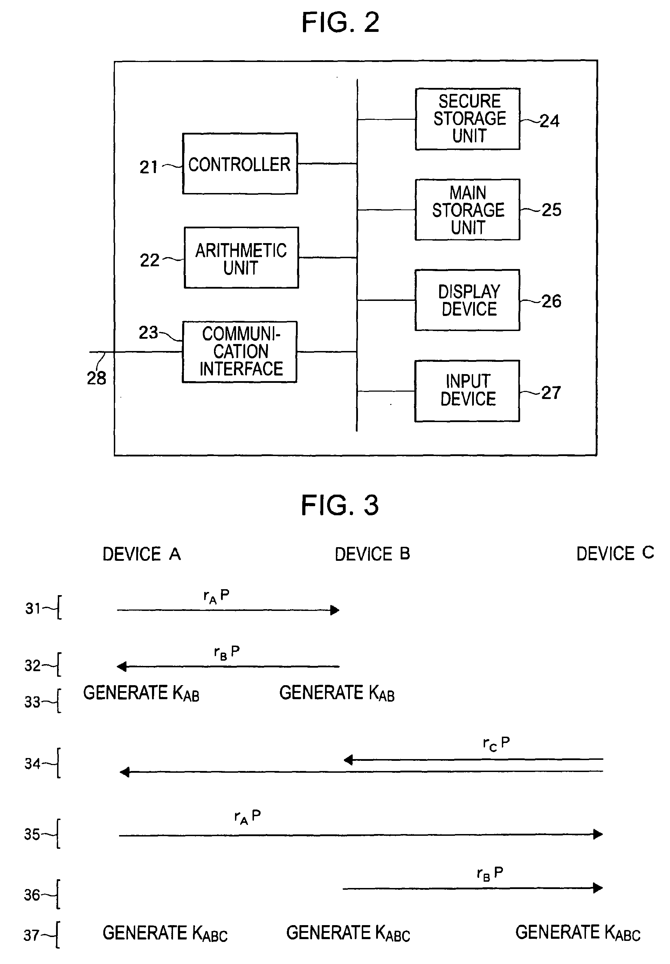

Fig. 2 shows an example configuration of a system according to an embodiment of the present invention (e.g., each of the devices A, B, and C shown in Fig. 1).

The system according to the embodiment of the present invention includes, for example, a controller 21, an arithmetic unit 22, a communication interface 23, a secure storage unit 24 that stores a cryptographic key, a main storage unit 25 capable of storing program code, and a display device 26 and an input device 27 serving as user interfaces. The display device 26 and the input device 27 are not essential in the system configuration.

In the system, for example, the following processing is performed. A program describing an operation according to an embodiment of the present invention is stored in the main storage unit 25. The program is a program for computing a common key between the devices A, B, and C or between the devices A and B from (1) a private key of a given device (e.g., the device A) and public keys of the other two devices (e.g., the devices B and C), or (2) a private key of a given device (e.g., the device A), a public key of the other device (e.g., the device B), and a pseudo-public key of a dummy device C'.

The controller 21 interprets the program code and executes the program code using the arithmetic unit 22 or the like. Communication with the center or other devices is performed via the communication interface 23 (28). A cryptographic key shared with other devices is stored in the secure storage unit 24, and is used for later encryption and decryption of communication.

A method for shifting from two-device key agreement to three-device key agreement and a method for shifting from three-device key agreement to two-device key agreement will now be descried with reference to Figs. 3 to 8.

Fig. 3 is a schematic flow diagram showing an exemplary method for shifting from two-device key agreement to three-device key agreement. In Fig. 3, steps 31 to 33 show a key agreement procedure between the devices A and B. Steps 34 to 37 show a procedure for shifting from bipartite key agreement between the devices A and B to tripartite key agreement between the devices A, B, and C.

In step 31, a public key $r_A P$ of the device A is sent to the device B. First, the device A randomly selects a random number $r_A \in Z_q^*$ to set a private key $r_A$. Then, the device A computes the public key $r_A P$ (where P denotes the parameter published in the center), and sends the public key $r_A P$ to the device B.

The device B also randomly selects a random number $r_B \in Z_q^*$ to set a private key $r_B$. Then, the device B computes a public key $r_B P$ (where P denotes the parameter published in the center), and sends the public key $r_B P$ to the device A (step 32).

In step 33, a common key $K_{AB}$ is generated by the devices A and B, and both devices agree on a key. The device A computes the common key $K_{AB}$ between the devices A and B using Eq. 3 below from the public key $r_B P$ sent from the device B, the pseudo-public key $P_{PUB}$ published in the center, and the own private key $r_A$ of the device A. The device B computes the common key $K_{AB}$ between the devices A and B using Eq. 4 below from the public key $r_A P$ sent from the device A, the pseudo-public key $P_{PUB}$ published in the center, and the private key $r_B$ of the device B.

$$K_{AB} = e\,(r_B P,\ P_{PUB})^{r_A}$$

$$\dots \text{Eq. 3}$$

$$K_{AB} = e\,(r_A P,\ P_{PUB})^{r_B}$$

$$\dots \text{Eq. 4}$$

Since Eqs. 3 and 4 are equal to each other due to the properties of the bilinear map, the common key $K_{AB}$ between the devices A and B is generated. Thus, the key $K_{AB}$ is shared between the devices A and B.

A procedure for shifting from bipartite key agreement between the devices A and B to tripartite key agreement between the devices A, B, and C (i.e., the processing from steps 34 to 37) will now be described.

In step 34, a public key $r_CP$ of a new device C is sent to the devices A and B. First, the device C randomly selects a random number $r_C \in Z_q^*$ to set a private key $r_C$. Then, the device C computes the public key $r_CP$ (where P denotes the parameter published in the center), and sends the public key $r_CP$ to the devices A and B.

In step 35, the public key $r_AP$ is sent from the device A to the device C, and, in step 36, the public key $r_BP$ is sent from the device B to the device C. That is, the public keys $r_AP$ and $r_BP$ of the devices A and B published in steps 31 and 32 are sent to the new device C.

In step 37, a common key $K_{ABC}$ is generated by the devices A, B, and C, and these three devices agree on a key. The device A computes the common key $K_{ABC}$ between the devices A, B, and C using Eq. 5 below from the public key $r_BP$ sent from the device B, the public key $r_CP$ sent from the device C, and the private key $r_A$ of the device A. The device B computes the common key $K_{ABC}$ between the devices A, B, and C using Eq. 6 below from the public key $r_AP$ sent from the device A, the public key $r_CP$ sent from the device C, and the private key $r_B$ of the device B. The device C computes the common key $K_{ABC}$ between the devices A, B, and C using Eq. 7 below from the public key $r_AP$ sent from the device A, the public key $r_BP$ sent from the device B, and the private key $r_C$ of the device C.

$$K_{ABC} = e\left(r_B P, \ r_C P\right)^{r_A}$$

$$\text{... Eq. 5}$$

$$K_{ABC} = e\left(r_A P, \ r_C P\right)^{r_B}$$

$$\text{... Eq. 6}$$

$$K_{ABC} = e\left(r_A P, \ r_B P\right)^{r_C}$$

$$\text{... Eq. 7}$$

Since Eqs. 5 to 7 are equal to each other due to the properties of the bilinear map, the common key $K_{ABC}$ between the devices A, B, and C is generated. Thus, the key $K_{ABC}$ is shared between the devices A, B, and C.

With the use of the key agreement method according to the embodiment of the present invention, the private keys $r_A$ and $r_B$ and the public keys $r_AP$ and $r_BP$, which are generated for bipartite key agreement between the devices A and B, can also be used for tripartite key agreement, thereby reducing the load of reconfiguring the private keys and public keys of the devices A and B.

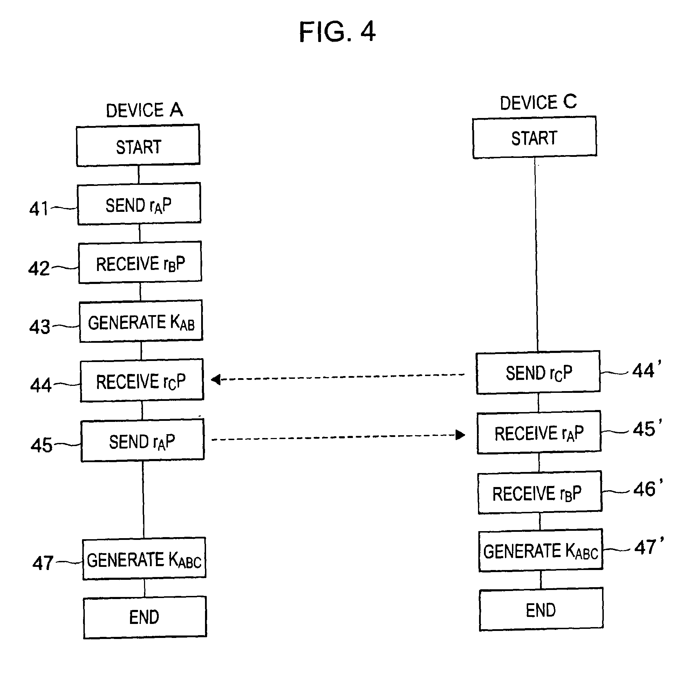

Steps 31 to 37 may be performed in different sequences, and the sequence is not limited to that shown in Fig. 3. For example, whenever and whichever of the parties first performs the processing of exchanging public keys (steps 31 and 32), the processing of generating a common key between two parties (step 33) may be performed at any time after the public keys are exchanged, and there are no further limitations. Furthermore, for example, whenever and in whichever sequence the processing of exchanging public keys (steps 31, 32, 34, 35, and 36) is performed, the processing of generating a common key between three parties (step 37) may be performed at any time after the public keys are exchanged, and there are no further limitations. The same applies to the flows and steps shown in Figs. 4 to 8 below.

Fig. 4 is a flow diagram showing the operation of the devices A and C in the method shown in Fig. 3. The operation of the device B is similar to that of the device A, and is thus omitted. The steps shown in the flow diagram of Fig. 4 may be automatically performed by building those steps into a program and storing the program into an information storage medium.

First, the operation of the device A will be described. The device A sends the public key $r_AP$ to the device B (step 41), and receives the public key $r_BP$ from the device B (step 42) to generate the common key $K_{AB}$ between the devices A and B (step 43). The common key $K_{AB}$ is generated in the above-described manner by computation from the private key (e.g., $r_A$) of one of the devices, the public key ($r_BP$) of the other device, and the pseudo-public key ($P_{PUB}$).

Then, bipartite key agreement between the devices A and B is shifted to tripartite key agreement between the devices A, B, and C. The device A receives the public key $r_CP$ from the device C (step 44), and sends the public key $r_AP$ of the device A to the device C (step 45). The device A generates the common key $K_{ABC}$ between the devices A, B, and C from the private key $r_A$ of the device A, the public key $r_BP$ of the device B, and the public key $r_CP$ of the device C (step 47). The shifting from bipartite key agreement between the devices A and B to tripartite key agreement between the devices A, B, and C is thus completed.

Next, the operation of the device C will be described. The device C sends the public key $r_CP$ of the device C to the device A (step 44'), and receives the public key $r_AP$ from the device A (step 45'). The device C also receives the public key $r_BP$ from the device B (step 46'). The device C generates the common key $K_{ABC}$ between three parties from the public key $r_AP$ of the device A, the public key $r_BP$ of the device B, and the private key $r_C$ of the device C (step 47'). The shifting from bipartite key agreement between the devices A and B to tripartite key agreement between the devices A, B, and C is thus completed.

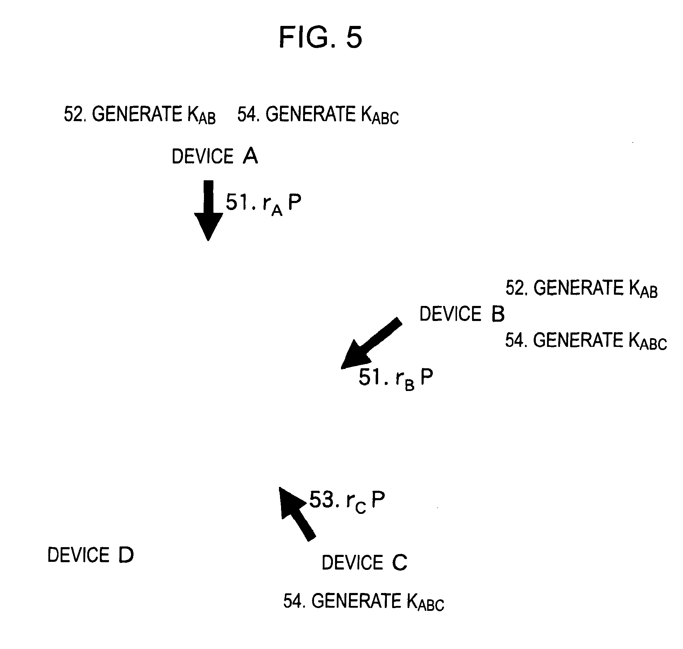

Fig. 5 is a schematic diagram showing another exemplary method for shifting from two-device key agreement to three-device key agreement. The difference from the method shown in Fig. 3 is that the devices A, B, and C use broadcast communication channels. That is, in Fig. 5, the data sent from the device A is distributed via broadcast communication to other devices (i.e., the devices B, C, and D).

In step 51, the devices A and B publish public keys $r_AP$ and $r_BP$, respectively. The device A randomly selects a random number $r_A \in Z_q^*$ to set a private key $r_A$. Thereafter, the device A computes the public key $r_AP$ (where P denotes the parameter published in the center), and publishes the public key $r_AP$. The device B also randomly selects a random number $r_B \in Z_q^*$ to set a private key $r_B$. Thereafter, the device B computes the public key $r_BP$ (where P denotes the parameter published in the center), and publishes the public key $r_BP$. Since the public keys $r_AP$ and $r_BP$ are distributed via broadcast communication, for example, the public key $r_AP$ sent from the device A can be received by all other devices (i.e., the devices B to D) shown in Fig. 5.

In step 52, a common key $K_{AB}$ between two parties is generated by the devices A and B. The device A computes the common key $K_{AB}$ between the devices A and B using Eq. 3 above from the public key $r_BP$ distributed via broadcast communication, the pseudo-public key $P_{PUB}$ published by the center, and the private key $r_A$ of the device A. The device B also computes the common key $K_{AB}$ between the devices A and B using Eq. 4 above from the public key $r_AP$ distributed from the device A, the pseudo-public key $P_{PUB}$ published by the center, and the private key $r_B$ of the device B.

As discussed above, since Eqs. 3 and 4 are equal to each other due to the properties of the bilinear map, the common key $K_{AB}$ between the devices A and B is generated. Thus, the key $K_{AB}$ is shared between the devices A and B.

The devices C and D are allowed to receive the public keys $r_AP$ and $r_BP$, and are able to send encrypted data to the device A or B. However, they are not able to decrypt information because no private key has been set and no public key has been generated based on the private key. At the stage of step 52, therefore, key agreement is achieved between only the devices A and B.

A procedure for shifting from bipartite key agreement between the devices A and B to tripartite key agreement between the devices A, B, and C will now be described.

In step 53, the device C publishes a public key $r_CP$. The device C randomly selects a random number $r_C \in Z_q^*$ to set a private key $r_C$. Thereafter, the device C computes the public key $r_CP$ (where P denotes the parameter published in the center), and publishes the public key $r_CP$. Since the public key $r_CP$ is distributed via broadcast communication, it can be received by all other devices (in the example shown in Fig. 5, the devices A, B, and D).

In step 54, a common key $K_{ABC}$ between three parties is generated by the devices A, B, and C. The device A computes the common key $K_{ABC}$ between the devices A, B, and C using Eq. 5 above from the public keys $r_BP$ and $r_CP$ distributed via broadcast communication and the private key $r_A$ of the device A. The device B computes the common key $K_{ABC}$ between the devices A, B, and C using Eq. 6 above from the public keys $r_AP$ and $r_CP$ distributed via broadcast communication and the private key $r_B$ of the device B. The device C computes the common key $K_{ABC}$ between the devices A, B, and C using Eq. 7 above from the public keys $r_AP$ and $r_BP$ distributed via broadcast communication and the private key $r_C$ of the device C.

As discussed above, since Eqs. 5 to 7 are equal to each other due to the properties of the bilinear map, the three-party common key $K_{ABC}$ between the devices A, B, and C is generated. Thus, the key $K_{ABC}$ is shared between the devices A, B, and C.

Therefore, the key agreement method according to the embodiment of the present invention can also be applied to communication networks based on broadcast communication channels.

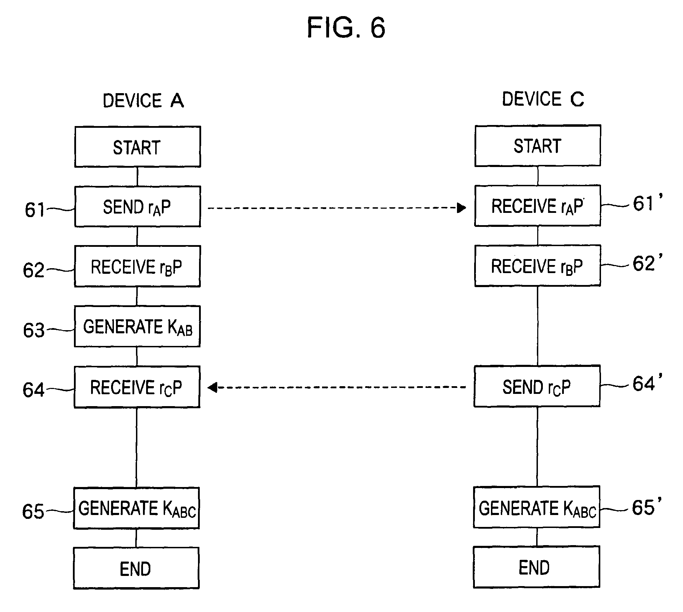

Fig. 6 is a flow diagram showing the operation of the devices A and C in the method shown in Fig. 5. The operation of the device B is similar to that of the device A, and is thus omitted. The steps shown in the flow diagram of Fig. 6 may be automatically performed by building those steps into a program and storing the program into an information storage medium.

First, the operation of the device A will be described. The device A distributes the public key $r_AP$ via broadcast communication (step 61), and receives the public key $r_BP$ distributed from the device B via broadcast communication (step 62) to generate the common key $K_{AB}$ between the devices A and B (step 63). The common key $K_{AB}$ is generated in the above-described manner by computation from the private key (e.g., $r_A$) of one of the devices, the public key ($r_BP$) of the other device, and the pseudo-public key ($P_{PUB}$).

Then, bipartite key agreement between the devices A and B is shifted to tripartite key agreement between the devices A, B, and C. The device A receives the public key $r_CP$ from the device C (step 64), and generates the common key $K_{ABC}$ between the devices A, B, and C from the public key $r_BP$ of the device B and the public key $r_CP$ of the device C (step 65). The shifting from bipartite key agreement between the devices A and B to tripartite key agreement between the devices A, B, and C is thus completed.

Next, the operation of the device C will be described. The difference from the flow of the device C shown in Fig. 4 is that the device C receives the public key $r_AP$ of the device A and the public key $r_BP$ of the device B in advance (steps 61' and 62'). In Fig. 6, the public key $r_AP$ of the device A and the public key $r_BP$ of the device B that are distributed via broadcast communication can also be received by the device C in advance.

The device C sets the private key $r_C$, generates the public key $r_CP$, and distributes the public key $r_CP$ via broadcast communication (step 64'). Thereafter, the device C generates the common key $K_{ABC}$ between three devices from the public key $r_AP$ of the device A and the public key $r_BP$ of the device B (step 65'). The shifting from bipartite key agreement between the devices A and B to tripartite key agreement between the devices A, B, and C is thus completed.

In a communication network based on broadcast communication channels, therefore, in the case of shifting from two-device key agreement to three-device key agreement, a new device (in Fig. 6, the device C) is only required to distribute its public key $r_CP$ via broadcast communication to achieve three-device key agreement. With application to communication networks based on broadcast communication channels, therefore, the communication load can advantageously be reduced.

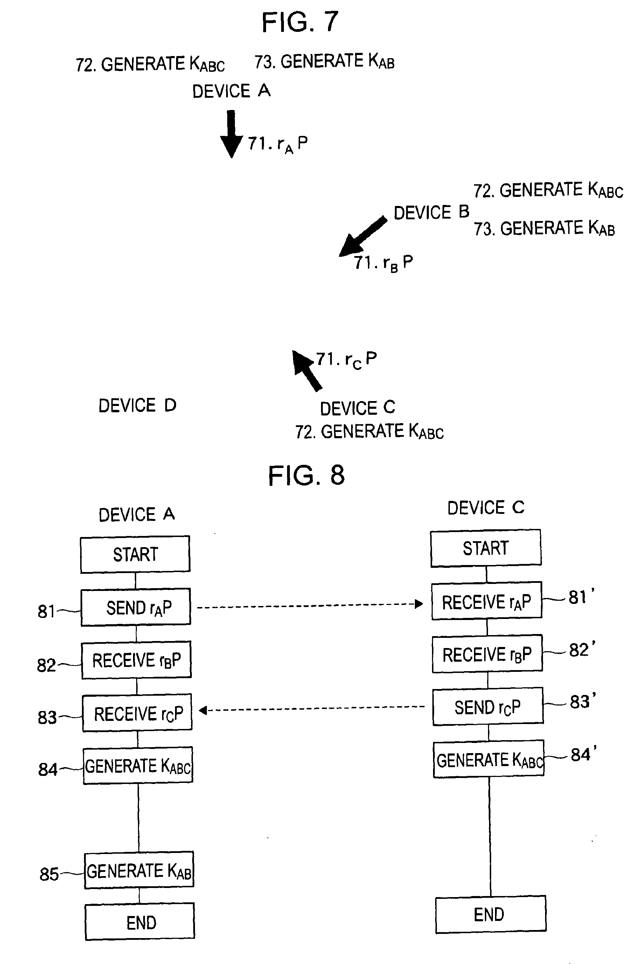

Fig. 7 is a schematic diagram showing an exemplary method for shifting from three-device key agreement to two-device key agreement. In Fig. 7, as in Fig. 5, devices use broadcast communication channels. However, the present invention is not limited to a method for shifting from three-device key agreement to two-device key agreement based on broadcast communication channels, and the method based on communication between only target devices, as in Fig. 3, may also fall within the scope of the invention.

In step 71, the devices A, B, and C publish public keys $r_AP$, $r_BP$, and $r_CP$, respectively. The device A randomly selects a random number $r_A \in Z_q{}^*$ to set a private key $r_A$. Thereafter, the device A computes the public key $r_AP$ (where P denotes the parameter published in the center), and publishes the public key $r_AP$. The device B randomly selects a random number $r_B \in Z_q{}^*$ to set a private key $r_B$. Thereafter, the device B computes the public key $r_BP$ (P denotes the parameter published in the center), and publishes the public key $r_BP$. The device C randomly selects a random number $r_C \in Z_q{}^*$ to set a private key $r_C$. Thereafter, the device C computes the public key $r_CP$ (P denotes the parameter published in the center), and publishes the public key $r_CP$ Since the public keys $r_AP$, $r_BP$, and $r_CP$ are distributed via broadcast communication, the public keys $r_AP$, $r_BP$, and $r_CP$ can be received by all devices other than the sender.

In step 72, a common key $K_{ABC}$ between three parties is generated by the devices A, B, and C. The device A computes the common key $K_{ABC}$ between the devices A, B, and C using Eq. 5 above from the public keys $r_BP$ and $r_CP$ distributed via broadcast communication and the private key $r_A$ of the device A. The device B computes the common key $K_{ABC}$ between the devices A, B, and C using Eq. 6 above from the public keys $r_AP$ and $r_CP$ distributed via broadcast communication and the private key $r_B$ of the device B. The device C computes the common key $K_{ABC}$ between the devices A, B, and C using Eq. 7 above from the public keys $r_AP$ and $r_BP$ distributed via broadcast communication and the private key $r_C$ of the device C.

As discussed above, since Eqs. 5 to 7 are equal to each other due to the properties of the bilinear map, the common key $K_{ABC}$ between the devices A, B, and C is generated. Thus, the key $K_{ABC}$ is shared between the devices A, B, and C.

A procedure for shifting from tripartite key agreement between the devices A, B, and C to bipartite key agreement between the devices A and B will now be described.

In step 73, a common key $K_{AB}$ between two parties is generated by the devices A and B. The device A computes the common key $K_{AB}$ between the devices A and B using Eq. 3 above from the public key $r_BP$ distributed via broadcast communication, the pseudo-public key $P_{PUB}$ published by the center, and the private key $r_A$ of the device A. The device B computes the common key $K_{AB}$ between the devices A and B using Eq. 4 above from the public key $r_AP$ sent from the device A, the pseudo-public key $P_{PUB}$ published by the center, and the private key $r_B$ of the device B.

As discussed above, since Eqs. 3 and 4 are equal to each other due to the properties of the bilinear map, the common key $K_{AB}$ between the devices A and B is generated. Thus, the key $K_{AB}$ is shared between the devices A and B.

In the foregoing description, tripartite key agreement between the devices A, B, and C is shifted to bipartite key agreement between the devices A and B. However, tripartite key agreement between the devices A, B, and C may also be shifted to bipartite key agreement between the devices A and C or between the devices B and C.

In the case of shifting from three-device key agreement to two-device key agreement, the common keys $K_{AB}$ and $K_{ABC}$ exist. Thus, data transmission between three devices using the common key $K_{ABC}$ is still active even after shifting from three-device key agreement to two-device key agreement.

The method described above can also be applied when the devices A and B agree on a key (i.e., a common key $K_{AB}$), the devices A and C agree on a key (i.e., a common key $K_{AC}$), or the devices B and C agree on a key (i.e., a common key $K_{BC}$) in the state where three devices share the common key $K_{ABC}$.

Fig. 8 is a flow diagram showing the operation of the devices A and C in the method shown in Fig. 7. The operation of the device B is similar to that of the device A, and is thus omitted. The steps shown in the flow diagram of Fig. 8 may be automatically performed by building those steps into a program and storing the program into an information storage medium.

First, the operation of the device A will be described. The device A distributes the public key $r_A P$ via broadcast communication (step 81), and receives the public keys $r_B P$ and $r_C P$ distributed from the devices B and C via broadcast communication (steps 82 and 83) to generate the common key $K_{ABC}$ between the devices A, B, and C (step 84). The common key $K_{ABC}$ is generated in the above-described manner by computation from the private key (e.g., $r_A$) of one the devices and the public keys ($r_B P$ and $r_C P$) of the other two devices.

Tripartite key agreement between the devices A, B, and C is shifted to bipartite key agreement between the devices A and B. The device A generates the common key $K_{AB}$ between the devices A and B from the private key $r_A$ of the device A and the public key $r_B P$ of the device B. The shifting from tripartite key agreement between the devices A, B, and C to bipartite key agreement between the devices A and B is thus completed.

Next, the operation of the device C will be described. The device C receives the public keys $r_A P$ and $r_B P$ distributed from the devices A and B via broadcast communication (steps 81' and 82'), and distributes the public key $r_C P$ via broadcast communication (step 83'). The device C generates the common key $K_{ABC}$ between the devices A, B, and C (step 84').

The shifting from tripartite key agreement between the devices A, B, and C to bipartite key agreement between the devices A and B is completed between the devices A and B. The common key $K_{ABC}$ between the devices A, B, and C is still active even after the common key $K_{AB}$ is generated by the devices A and B (step 85).

It should be understood by those skilled in the art that various modifications, combinations, sub-combinations and alterations may occur depending on design requirements and other factors insofar as they are within the scope of the appended claims or the equivalents thereof.

**Claims**

1. A method for shifting a key agreement status in a public-key cryptographic protocol that allows key agreement between three devices, the method comprising the steps of:

   under conditions that allow key agreement between three devices including a first device, a second device, and a dummy device, reaching key agreement between the first device and the second device; and
   replacing the dummy device with a third device, thereby shifting from two-device key agreement to three-device key agreement.

2. A method for shifting a key agreement status in a public-key cryptographic protocol that allows key agreement between three devices, the method comprising the steps of:

   reaching key agreement between three devices in advance; and
   replacing one of the three devices with a dummy device, thereby shifting from three-device key agreement to two-device key agreement.

3. The method according to claim 1 or claim 2, wherein a pseudo-public key of the dummy device is computed from a random value serving as an alternative private key and a parameter used to generate a public key from a private key.

4. The method according to claim 1 or claim 2, wherein the public-key cryptographic protocol is a key agreement protocol using a bilinear map.

5. A system for shifting from two-device key agreement to three-device key agreement or from three-device key agreement to two-device key agreement using a public-key cryptographic protocol that allows key agreement between three devices, the system at least comprising:

   a main storage unit (25) that stores a program for determining a common key from a combination of a private key of one of the three devices, and public keys of the other two devices or a combination of a private key of one of the three devices, a public key of another device, and a pseudo-public key of a dummy device;

a controller (21) that interprets the program;
an arithmetic unit (22) that executes the program;
a communication interface (23) that communicates with another device; and
a secure storage unit (24) that stores the common key,

6. An information storage medium storing a program for shifting from key agreement between a first device and a second device to key agreement between the first device, the second device, and a third device, the program comprising the steps of:

sending a public key of the first device to the second device in case of key agreement between the first device and the second device;
receiving a public key of the second device;
generating a common key from a private key of the first device, the public key of the second device, and a pseudo-public key of a dummy device;
receiving a public key of the third device;
sending the public key of the first device to the third device; and
generating a common key between the first device, the second device, and the third device from the private key of the first device, the public key of the second device, and the public key of the third device.

7. An information storage medium storing a program for shifting from key agreement between a first device, a second device, and a third device to key agreement between the first device and the second device, the program comprising the steps of:

sending a public key of the first device to the second device and the third device;
receiving a public key of the second device and a public key of the third device;
generating a common key between the first device, the second device, and the third device from a private key of the first device, the public key of the second device, and the public key of the third device; and
generating a common key between the first device and the second device based on the public key of the second device and the private key of the first device.

# FIG. 1

DEVICE A

14

11

13

CENTER

15

16

DEVICE B

12

DEVICE C

# FIG. 2

# FIG. 3

# FIG. 4

DEVICE A

| START |

41 — | SEND $r_A P$ |

42 — | RECEIVE $r_B P$ |

43 — | GENERATE $K_{AB}$ |

44 — | RECEIVE $r_C P$ |

45 — | SEND $r_A P$ |

47 — | GENERATE $K_{ABC}$ |

| END |

DEVICE C

| START |

| SEND $r_C P$ | — 44'

| RECEIVE $r_A P$ | — 45'

| RECEIVE $r_B P$ | — 46'

| GENERATE $K_{ABC}$ | — 47'

| END |

# FIG. 5

52. GENERATE $K_{AB}$     54. GENERATE $K_{ABC}$

DEVICE A

51. $r_A P$

52. GENERATE $K_{AB}$

DEVICE B

54. GENERATE $K_{ABC}$

51. $r_B P$

53. $r_C P$

DEVICE D

DEVICE C

54. GENERATE $K_{ABC}$

# FIG. 6

DEVICE A

- START
- 61 — SEND $r_AP$
- 62 — RECEIVE $r_BP$
- 63 — GENERATE $K_{AB}$
- 64 — RECEIVE $r_CP$
- 65 — GENERATE $K_{ABC}$
- END

DEVICE C

- START
- RECEIVE $r_AP$ — 61'
- RECEIVE $r_BP$ — 62'
- SEND $r_CP$ — 64'
- GENERATE $K_{ABC}$ — 65'
- END

# FIG. 7

72. GENERATE $K_{ABC}$     73. GENERATE $K_{AB}$

DEVICE A

↓ 71. $r_A$ P

72. GENERATE $K_{ABC}$

DEVICE B

73. GENERATE $K_{AB}$

71. $r_B$ P

71. $r_C$ P

DEVICE D

DEVICE C

72. GENERATE $K_{ABC}$

# FIG. 8

DEVICE A

| START |
|-------|

81 — SEND $r_A$P

82 — RECEIVE $r_B$P

83 — RECEIVE $r_C$P

84 — GENERATE $K_{ABC}$

85 — GENERATE $K_{AB}$

| END |
|-----|

DEVICE C

| START |
|-------|

RECEIVE $r_A$P — 81'

RECEIVE $r_B$P — 82'

SEND $r_C$P — 83'

GENERATE $K_{ABC}$ — 84'

| END |
|-----|

**European Patent**
**Office**

**EUROPEAN SEARCH REPORT**

Application Number

EP 05 29 2380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 198 47 941 A1 (DEUTSCHE TELEKOM AG) 13 April 2000 (2000-04-13) | 1,2 | H04L9/08 |
| Y | * abstract * * page 3, line 18 - line 48 * * page 4, line 28 - line 39 * ----- | 3-7 | |
| Y,D | JOUX A: "A ONE ROUND PROTOCOL FOR TRIPARTITE DIFFIE-HELLMAN" JOURNAL OF CRYPTOLOGY, SPRINGER VERLAG, NEW YORK, NY, US, vol. 17, no. 4, 21 September 2004 (2004-09-21), pages 263-276, XP001221153 ISSN: 0933-2790 * paragraph [0003] * ----- | 3-7 | |
| A | SHENGLI LIU ET AL: "Id-based tripartite key agreement protocol with pairings" PROCEEDINGS 2003 IEEE INTERNATIONAL SYMPOSIUM ON INFORMATION THEORY. ISIT 03. YOKOHAMA, JAPAN, JUNE 29 - JULY 4, 2003, IEEE INTERNATIONAL SYMPOSIUM ON INFORMATION THEORY, NEW YORK, NY : IEEE, US, 29 June 2003 (2003-06-29), pages 136-136, XP010657164 ISBN: 0-7803-7728-1 * the whole document * ----- | 1-7 | TECHNICAL FIELDS SEARCHED (IPC) H04L |

The present search report has been drawn up for all claims

| Place of search | Date of completion of the search | Examiner |
|---|---|---|
| Munich | 25 January 2006 | Cretaine, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

European Patent

Office

**Application Number**

EP 05 29 2380

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**LACK OF UNITY OF INVENTION**
**SHEET B**

The Search Division considers that the present European patent application does not comply with the requirements of unity of invention and relates to several inventions or groups of inventions, namely:

    1. claims: 1,3,4,5,6

            Method, system and program storing medium for shifting from
            two-device key agreement to three-device key agreement
                              ---

    2. claims: 2,3,4,5,7

            Method, system and program storage medium for shifting from
            three-device key agreement to two-device key agreement
                              ---

## ANNEX TO THE EUROPEAN SEARCH REPORT
## ON EUROPEAN PATENT APPLICATION NO.

EP 05 29 2380

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2006

| Patent document cited in search report | | Publication date | Patent family member(s) | | Publication date |
|---|---|---|---|---|---|
| DE 19847941 | A1 | 13-04-2000 | AT | 247349 T | 15-08-2003 |
| | | | WO | 0022775 A1 | 20-04-2000 |
| | | | EP | 1119942 A1 | 01-08-2001 |
| | | | HU | 0104054 A2 | 28-03-2002 |
| | | | JP | 2002527992 T | 27-08-2002 |

EPO FORM P0459

For more details about this annex : see Official Journal of the European Patent Office, No. 12/82